# EUROPEAN PATENT APPLICATION

(11) **EP 4 794 395 A1**
(43) Date of publication of application: **19.08.2026**
(21) Application number: 24884769.1
(22) Date of filing: 30.10.2024
(51) Int. Cl.: H04W 48/00

(54) **COMMUNICATION METHOD, COMMUNICATION APPARATUS, AND SYSTEM**

(30) Priority: 30.10.2023 CN 202311428335
(71) Applicant: HUAWEI TECHNOLOGIES CO., LTD., Shenzhen, Guangdong 518129 (CN)
(72) Inventor: LIU, Heng, Shenzhen, Guangdong 518129 (CN); MA, Chuan, Shenzhen, Guangdong 518129 (CN)
(74) Representative: Pfenning, Meinig & Partner mbB
(86) International application number: PCT/CN2024/128308
(87) International publication number: WO 2025/092767

(57) **Abstract**

A communication method, a communication apparatus, and a system are provided, pertaining to the field of communication technologies. In the method, an access network device sends first information to a terminal device, where the first information is for configuring a first parameter. The terminal device performs network access in a first network slice access stratum group based on the first parameter, records information related to the first network slice access stratum group, and sends the information to the access network device. The access network device may adjust a parameter configuration at the NSAG granularity based on the information, thereby enabling adjustment of a parameter configuration at the NSAG granularity.

## Description

This application claims priority to Chinese Patent Application No. 202311428335.9, filed with the China National Intellectual Property Administration on October 30, 2023 and entitled "COMMUNICATION METHOD, COMMUNICATION APPARATUS, AND SYSTEM", which is incorporated herein by reference in its entirety.

### TECHNICAL FIELD

This application relates to the field of communication technologies, and more specifically, to a communication method, a communication apparatus, and a system.

### BACKGROUND

Network slicing (network slicing, NS), as a key technology of 5th generation (5th generation, 5G) communication, has gained extensive attention and research within the 3rd generation partnership project (3rd generation partnership project, 3GPP) and other international standardization organizations. It enables operators to meet customized requirements of various industries, vertical markets, and virtual operation services.

An access stratum (access stratum, AS) of a network usually configures some access parameters for each group of network slices (or for each network slice access stratum group (network slice access stratum group, NSAG)). A terminal device uses these parameters to perform access procedures, for example, cell reselection (cell reselection) or random access (random access channel, RACH). However, a technical challenge that remains to be addressed is how to efficiently adjust a parameter at the NSAG granularity.

### SUMMARY

This application provides a communication method, a communication apparatus, and a system that support adjustment of a parameter configuration at the NSAG granularity.

According to a first aspect, a communication method is provided. The communication method includes: receiving first information, where the first information is for configuring a first parameter, and the first parameter corresponds to a first network slice access stratum group; and sending second information, where the second information indicates information that is related to the first network slice access stratum group and that is used when a terminal device performs network access based on the first parameter.

The solution in the first aspect may be performed by the terminal device, or may be performed by a module (for example, a chip system) of the terminal device, or may be performed by a logical node, a logical module, or software that can implement all or some functions of the terminal device. This is not limited. For ease of description, the following uses the terminal device as an example for description.

In the foregoing solution, the terminal device may initiate network access on the first network slice access stratum group based on the first parameter configured by the first information, and may record information related to the first network slice access stratum group, for example, identification information of a network slice access stratum group selected by the terminal device or network slice access stratum group priority information related to the network slice access stratum group selected by the terminal device.

Further, the terminal device reports the information related to the first network slice access stratum group to an access network device, and the access network device may adjust a parameter configuration at the NSAG granularity based on the information.

In some implementations of the first aspect, the method further includes: receiving request information, where the request information is for requesting the terminal device to send the second information.

In this way, the terminal device can send the second information to the access network device based on a request of the access network device.

In some implementations of the first aspect, the sending the second information includes: sending the second information to a central unit of the access network device.

In this way, the access network device can receive and process information by using a split architecture. This facilitates deployment of the access network device. For example, cloud-based deployment can be performed.

According to a second aspect, a communication method is provided. The communication method is applied to an access network device, and includes: sending first information, where the first information is for configuring a first parameter, and the first parameter corresponds to a first network slice access stratum group; and receiving second information, where the second information indicates information that is related to the first network slice access stratum group and that is used when a terminal device performs first network access based on the first parameter.

The solution in the second aspect may be performed by the access network device, or may be performed by a module (for example, a chip system) of the access network device, or may be performed by a logical node, a logical module, or software that can implement all or some functions of the access network device. This is not limited. For ease of description, the following uses the access network device as an example for description.

In the foregoing solution, the access network device may adjust a parameter configuration at the NSAG granularity based on the information that is related to the first network slice access stratum group and that is indicated by the second information sent by the terminal device. For example, the access network device may adjust a cell reselection parameter of the first network slice access stratum group or adjust a random access configuration parameter of the first network slice access stratum group based on the information related to the first network slice access stratum group.

In some implementations of the second aspect, the method further includes: sending request information, where the request information is for requesting the terminal device to send the second information.

In this way, the terminal device can send the second information to the access network device based on a request of the access network device.

In some implementations of the second aspect, the method further includes: sending third information, where the third information is determined based on second information, the third information is for configure a second parameter, the second parameter is for performing second network access, the second parameter corresponds to the first network slice access stratum group, and the second parameter is different from the first parameter.

In this way, the access network device can send, to another terminal device, a new parameter configuration obtained through adjustment of a parameter configuration at the granularity of the first network slice access stratum group, so that the another terminal device can perform network access or the like based on the parameter configuration obtained through the adjustment.

In some implementations of the second aspect, the access network device includes a distributed unit and a central unit. The receiving the second information includes: receiving, by the central unit, the second information; and sending, by the central unit, the second information to the distributed unit.

In this way, the access network device can receive and process information by using a split architecture. This facilitates deployment of the access network device. For example, cloud-based deployment can be performed.

In some implementations of the second aspect, the network access is random access, and the second information sent by the central unit to the distributed unit further includes at least one of the following: an average quantity of transmissions of a preamble corresponding to a signal based on which the random access is performed, a largest quantity of transmissions of the preamble corresponding to the signal based on which the random access is performed, a predicted value of the average quantity of transmissions of the preamble corresponding to the signal based on which the random access is performed, or a predicted value of the largest quantity of transmissions of the preamble corresponding to the signal based on which the random access is performed.

In this way, the access network device can adjust a random access parameter configuration at the granularity of the first network slice access stratum group more precisely based on the one or more pieces of information.

With reference to the solution in either of the first aspect and the second aspect, the network access is at least one of cell reselection or random access.

When the network access is the cell reselection, adjustment of a parameter configuration related to the cell reselection at the NSAG granularity may be supported in this embodiment of this application. When the network access is the random access, adjustment of a parameter configuration related to the random access at the NSAG granularity may be supported in this embodiment of this application.

With reference to the solution in either of the first aspect and the second aspect, the network access is the random access, and the second information includes identification information of the first network slice access stratum group.

In this way, the access network device can determine that a network slice access stratum group selected by the terminal device is the first network slice access stratum group.

With reference to the solution in either of the first aspect and the second aspect, the second information further includes at least one of the following: a cell identifier, an index of a signal based on which the random access is performed, or a quantity of preambles corresponding to the signal based on which the random access is performed, where the signal based on which the random access is performed is associated with the first network slice access stratum group.

In this way, the access network device can obtain related information used when the terminal device performs random access on the first network slice access stratum group.

With reference to the solution in either of the first aspect and the second aspect, the network access is the cell reselection, and the second information includes at least one of the following: identification information of the first network slice access stratum group or identification information of a second network slice access stratum group, where the first network slice access stratum group is a network slice access stratum group selected by the terminal device. The second network slice access stratum group meets at least one of the following: A priority of the second network slice access stratum group is higher than a priority of the first network slice access stratum group; or a priority of the second network slice access stratum group is equal to a priority of the first network slice access stratum group.

In this way, the access network device can adjust, based on the foregoing information, a cell reselection-related parameter configuration at the NSAG granularity, for example, adjust information about a reselection priority of a part of network slice access stratum groups, so that the terminal device does not select a high-load carrier for access when performing cell reselection.

With reference to the solution in either of the first aspect and the second aspect, the second network slice access stratum group further meets: The second network slice access stratum group is a network slice access stratum group with a highest priority among one or more network slice access stratum groups maintained by the terminal device.

In this way, the access network device can obtain identification information of the network slice access stratum group with the highest priority among the one or more network slice access stratum groups maintained by the terminal device.

With reference to the solution in either of the first aspect and the second aspect, the second information is carried in radio resource control signaling.

For example, the second information may be carried in a user equipment information response (UE Information Response) message. In this way, the information related to the first network slice access stratum group can be reported to the access network device by using existing information.

With reference to the solution in either of the first aspect and the second aspect, the second information is sent after the terminal device enters a connected state. In this way, the terminal device can avoid frequently entering the connected state to report the second information, so as to reduce energy consumption of the terminal.

According to a third aspect, a communication system is provided. The communication system includes a distributed unit and a central unit. The central unit is configured to send first information, where the first information is for configuring a first parameter, and the first parameter corresponds to a first network slice access stratum group. The central unit is further configured to receive second information, where the second information indicates information that is related to the first network slice access stratum group and that is used when a terminal device performs network access based on the first parameter; and the central unit is further configured to send the second information to the distributed unit. The distributed unit is configured to receive the second information.

The communication system may be understood as a communication device or a communication apparatus. For example, the communication system may be understood as an access network device. The distributed unit and the central unit may be used as components of the access network device, and information exchange may be performed between the distributed unit and the central unit.

It should be noted that the central unit may be responsible for functions such as information receiving and sending. The central unit communicates with the terminal device. For example, the central unit sends the first information to the terminal device, and the central unit receives the second information from the terminal device. The distributed unit may be responsible for functions such as information processing. For example, the distributed unit is configured to adjust a parameter configuration at the NSAG granularity based on the second information.

In a possible implementation, the distributed unit may be understood as a distributed device or a distributed apparatus, and can be configured to implement a function that is the same as or similar to that of the distributed unit. The central unit may be understood as a central device, a central apparatus, or the like, and can be configured to implement a function that is the same as or similar to that of the central unit.

In some implementations of the third aspect, the network access is at least one of cell reselection or random access.

In some implementations of the third aspect, the network access is the random access, and the second information includes identification information of the first network slice access stratum group.

In some implementations of the third aspect, the network access is the cell reselection, and the second information includes at least one of the following: identification information of the first network slice access stratum group or identification information of a second network slice access stratum group, where the first network slice access stratum group is a network slice access stratum group selected by the terminal device. The second network slice access stratum group meets at least one of the following: A priority of the second network slice access stratum group is higher than a priority of the first network slice access stratum group; or a priority of the second network slice access stratum group is equal to a priority of the first network slice access stratum group.

In some implementations of the third aspect, the distributed unit is configured to determine third information based on the second information, where the third information is for configuring a second parameter, the second parameter is for performing the network access, the second parameter corresponds to the first network slice access stratum group, and the second parameter is different from the first parameter; and the distributed unit is further configured to send the third information to the central unit. The central unit is configured to receive the third information, and is further configured to send the third information.

In some implementations of the third aspect, the second information further includes at least one of the following: a cell identifier, an index of a signal based on which the random access is performed, or a quantity of preambles corresponding to the signal based on which the random access is performed, where the signal based on which the random access is performed is associated with the first network slice access stratum group.

In some implementations of the third aspect, the network access is the cell reselection, and the second information includes at least one of the following: identification information of the first network slice access stratum group or identification information of a second network slice access stratum group, where the first network slice access stratum group is a network slice access stratum group selected by the terminal device. The second network slice access stratum group meets at least one of the following: A priority of the second network slice access stratum group is higher than a priority of the first network slice access stratum group; or a priority of the second network slice access stratum group is equal to a priority of the first network slice access stratum group.

In some implementations of the third aspect, the second network slice access stratum group further meets: The second network slice access stratum group is a network slice access stratum group with a highest priority among one or more network slice access stratum groups maintained by the terminal device.

In some implementations of the third aspect, the central unit is further configured to send request information, where the request information is for requesting the terminal device to send the second information.

In some implementations of the third aspect, the network access is the random access, and the second information sent by the central unit to the distributed unit further includes at least one of the following: an average quantity of transmissions of the preamble corresponding to the signal based on which the random access is performed, a largest quantity of transmissions of the preamble corresponding to the signal based on which the random access is performed, a predicted value of the average quantity of transmissions of the preamble corresponding to the signal based on which the random access is performed, or a predicted value of the largest quantity of transmissions of the preamble corresponding to the signal based on which the random access is performed.

In some implementations of the third aspect, the second information is carried in radio resource control signaling.

In some implementations of the third aspect, the second information is sent by the terminal device in a connected state.

According to a fourth aspect, a communication apparatus is provided. The communication apparatus may be a terminal device, or may be a device, a module, or the like configured to perform a function of the terminal device.

In a possible implementation, the communication apparatus may include modules or units that perform the one-to-one corresponding methods/operations/steps/actions described in the first aspect. The module or unit may be implemented by a hardware circuit, software, or a combination of a hardware circuit and software.

According to a fifth aspect, a communication apparatus is provided. The communication apparatus may be an access network device, or may be a device, a module, or the like configured to perform a function of the access network device.

In a possible implementation, the communication apparatus may include modules or units that perform the one-to-one corresponding methods/operations/steps/actions described in the second aspect. The module or unit may be implemented by a hardware circuit, software, or a combination of a hardware circuit and software.

According to a sixth aspect, a communication apparatus is provided. The communication apparatus includes a transceiver unit, configured to send first information, where the first information is for configuring a first parameter, and the first parameter corresponds to a first network slice access stratum group. The transceiver unit is further configured to receive second information, where the second information indicates information that is related to the first network slice access stratum group and that is used when a terminal device performs network access based on the first parameter; and the transceiver unit is further configured to send the second information to a distributed unit. The transceiver unit is further configured to send the second information.

The communication apparatus may be used as a component of an access network device. For example, the communication apparatus may be a central unit in the access network device, and the communication apparatus may interact with the terminal device and a distributed unit in the access network device. For example, the communication apparatus is configured to: receive the second information from the terminal device, and send the second information to a distributed unit.

In some implementations of the sixth aspect, the network access is at least one of cell reselection or random access.

In some implementations of the sixth aspect, the network access is the random access, and the second information includes identification information of the first network slice access stratum group.

In some implementations of the sixth aspect, the network access is the cell reselection, and the second information includes at least one of the following: identification information of the first network slice access stratum group or identification information of a second network slice access stratum group, where the first network slice access stratum group is a network slice access stratum group selected by the terminal device. The second network slice access stratum group meets at least one of the following: A priority of the second network slice access stratum group is higher than a priority of the first network slice access stratum group; or a priority of the second network slice access stratum group is equal to a priority of the first network slice access stratum group.

In some implementations of the sixth aspect, the second information further includes at least one of the following: a cell identifier, an index of a signal based on which the random access is performed, or a quantity of preambles corresponding to the signal based on which the random access is performed, where the signal based on which the random access is performed is associated with the first network slice access stratum group.

In some implementations of the sixth aspect, the network access is the cell reselection, and the second information includes at least one of the following: identification information of the first network slice access stratum group or identification information of a second network slice access stratum group, where the first network slice access stratum group is a network slice access stratum group selected by the terminal device. The second network slice access stratum group meets at least one of the following: A priority of the second network slice access stratum group is higher than a priority of the first network slice access stratum group; or a priority of the second network slice access stratum group is equal to a priority of the first network slice access stratum group.

In some implementations of the sixth aspect, the second network slice access stratum group further meets: The second network slice access stratum group is a network slice access stratum group with a highest priority among one or more network slice access stratum groups maintained by the terminal device.

In some implementations of the sixth aspect, the transceiver unit is further configured to send request information, where the request information is for requesting the terminal device to send the second information.

In some implementations of the sixth aspect, the network access is the random access, and the second information sent by the transceiver unit further includes at least one of the following: an average quantity of transmissions of the preamble corresponding to the signal based on which the random access is performed, a largest quantity of transmissions of the preamble corresponding to the signal based on which the random access is performed, a predicted value of the average quantity of transmissions of the preamble corresponding to the signal based on which the random access is performed, or a predicted value of the largest quantity of transmissions the preamble corresponding to the signal based on which the random access is performed.

In some implementations of the sixth aspect, the second information is carried in radio resource control signaling.

In some implementations of the sixth aspect, the second information is sent by the terminal device in a connected state.

According to a seventh aspect, a communication apparatus is provided. The communication apparatus includes a transceiver unit, configured to send first information, where the first information is for configuring a first parameter, and the first parameter corresponds to a first network slice access stratum group. The transceiver unit is further configured to receive second information, where the second information indicates information that is related to the first network slice access stratum group and that is used when a terminal device performs network access based on the first parameter; and the transceiver unit is further configured to send the second information to a distributed unit.

The communication apparatus may be used as a component of an access network device, for example, may be a distributed unit in the access network device. The communication apparatus interacts with a central unit in the access network device, for example, sends the first information to the central unit and receives the second information from the central unit.

In some implementations of the seventh aspect, the network access is at least one of cell reselection or random access.

In some implementations of the seventh aspect, the network access is the random access, and the second information includes identification information of the first network slice access stratum group.

In some implementations of the seventh aspect, the network access is the cell reselection, and the second information includes at least one of the following: identification information of the first network slice access stratum group or identification information of a second network slice access stratum group, where the first network slice access stratum group is a network slice access stratum group selected by the terminal device. The second network slice access stratum group meets at least one of the following: A priority of the second network slice access stratum group is higher than a priority of the first network slice access stratum group; or a priority of the second network slice access stratum group is equal to a priority of the first network slice access stratum group.

In some implementations of the seventh aspect, the second information further includes at least one of the following: a cell identifier, an index of a signal based on which the random access is performed, or a quantity of preambles corresponding to the signal based on which the random access is performed, where the signal based on which the random access is performed is associated with the first network slice access stratum group.

In some implementations of the seventh aspect, the network access is the cell reselection, and the second information includes at least one of the following: identification information of the first network slice access stratum group or identification information of a second network slice access stratum group, where the first network slice access stratum group is a network slice access stratum group selected by the terminal device. The second network slice access stratum group meets at least one of the following: A priority of the second network slice access stratum group is higher than a priority of the first network slice access stratum group; or a priority of the second network slice access stratum group is equal to a priority of the first network slice access stratum group.

In some implementations of the seventh aspect, the second network slice access stratum group further meets: The second network slice access stratum group is a network slice access stratum group with a highest priority among one or more network slice access stratum groups maintained by the terminal device.

In some implementations of the seventh aspect, the transceiver unit is further configured to send request information, where the request information is for requesting the terminal device to send the second information.

In some implementations of the seventh aspect, the network access is the random access, and the second information sent by the transceiver unit further includes at least one of the following: an average quantity of transmissions of the preamble corresponding to the signal based on which the random access is performed, a largest quantity of transmissions of the preamble corresponding to the signal based on which the random access is performed, a predicted value of the average quantity of transmissions of the preamble corresponding to the signal based on which the random access is performed, or a predicted value of the largest quantity of transmissions of the preamble corresponding to the signal based on which the random access is performed.

In some implementations of the seventh aspect, the second information is carried in radio resource control signaling.

In some implementations of the seventh aspect, the second information is sent by the terminal device in a connected state.

In some implementations of the seventh aspect, the communication apparatus further includes a processing unit, configured to determine third information based on the second information, where the third information is for configuring a second parameter, the second parameter is for performing the network access, the second parameter corresponds to the first network slice access stratum group, and the second parameter is different from the first parameter. The transceiver unit is further configured to send the third information.

According to an eighth aspect, a communication apparatus is provided. The communication apparatus includes a processor. The processor is configured to cause, by executing a computer program or instructions or by using a logic circuit, the communication apparatus to perform the method in any one of the first aspect and the possible implementations of the first aspect, or the communication apparatus to perform the method in any one of the second aspect and the possible implementations of the second aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a ninth aspect, a communication apparatus is provided. The communication apparatus includes a logic circuit and an input/output interface. The input/output interface is configured to input and/or output a signal. The logic circuit is configured to perform the method in any one of the first aspect and the possible implementations of the first aspect. Alternatively, the logic circuit is configured to perform the method in any one of the second aspect and the possible implementations of the second aspect.

According to a tenth aspect, a computer-readable storage medium is provided. The computer-readable storage medium stores a computer program or instructions. When the computer program or the instructions are run on a computer, the method in any one of the first aspect and the possible implementations of the first aspect is performed, or the method in any one of the second aspect and the possible implementations of the second aspect is performed.

According to an eleventh aspect, a computer program product is provided. The computer program product includes instructions. When the instructions are run on a computer, the method in any one of the first aspect and the possible implementations of the first aspect is performed, or the method in any one of the second aspect and the possible implementations of the second aspect is performed.

According to a twelfth aspect, a communication system is further provided. The communication system includes a terminal device and an access network device. The terminal device is configured to perform the method in any one of the first aspect and the possible implementations of the first aspect. The access network device is configured to perform the method in any one of the second aspect and the possible implementations of the second aspect.

For descriptions of beneficial effects of any one of the third aspect to the twelfth aspect, refer to the descriptions of the beneficial effects of the first aspect and the second aspect.

### BRIEF DESCRIPTION OF DRAWINGS

FIG. 1 is a diagram of a communication system 100 to which an embodiment of this application is applicable;
FIG. 2 is a diagram of a network architecture 200 to which an embodiment of this application is applicable;
FIG. 3 is a diagram of a network architecture 300 to which an embodiment of this application is applicable;
FIG. 4a and FIG. 4b are diagrams of a protocol stack 400 according to an embodiment of this application;
FIG. 5 is a schematic interaction flowchart of a communication method 500 according to an embodiment of this application;
FIG. 6 is a schematic interaction flowchart of a communication method 600 according to an embodiment of this application;
FIG. 7 is a schematic interaction flowchart of a communication method 700 according to an embodiment of this application;
FIG. 8 is a schematic interaction flowchart of a communication method 800 according to an embodiment of this application;
FIG. 9 is a schematic interaction flowchart of a communication method 900 according to an embodiment of this application;
FIG. 10 is a block diagram of a communication apparatus 1000 according to an embodiment of this application; and
FIG. 11 is a block diagram of a communication apparatus 1100 according to an embodiment of this application.

### DESCRIPTION OF EMBODIMENTS

The following describes technical solutions of this application with reference to the accompanying drawings.

For ease of understanding embodiments of this application, the following descriptions are provided first.
1. Unless otherwise specified, "at least two" means two or more.
2. Unless otherwise stated or there is a logic conflict, terms and/or descriptions in different embodiments of this application are consistent and may be mutually referenced, and technical features in different embodiments may be combined based on an internal logical relationship thereof, to form a new embodiment.
3. Various numbers in this application are merely used for differentiation for ease of description, but are not used to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if exists) are intended to distinguish between similar objects, but do not necessarily indicate a specific order or sequence. Data used in such a way is interchangeable in appropriate circumstances, so that embodiments described herein can be implemented in other orders than the order illustrated or described herein.

In addition, any embodiment or design solution described as an "example" or "for example" in this application should not be explained as being more preferred or having more advantages than another embodiment or design solution. Exactly, use of the terms such as "example" or "for example" is intended to present a related concept in a specific manner for ease of understanding.

4. The terms "include", "have", and any variants thereof are intended to cover a non-exclusive inclusion. For example, a process, method, system, product, or device that includes a series of steps or units is not necessarily limited to those expressly listed steps or units, but may include other steps or units not expressly listed or inherent to such a process, method, product, or device.

5. In this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners, for example, but not limited to, the to-be-enabled information, such as the to-be-enabled information or an index of the to-be-enabled information, may be directly enabled. Alternatively, the to-be-enabled information may be indirectly enabled by enabling other information. There is an association relationship between the other information and the to-be-enabled information. Alternatively, only a part of the to-be-enabled information may be enabled, and another part of the to-be-enabled information are known or agreed in advance. For example, specific information may be enabled in a pre-agreed (for example, specified in a protocol) arrangement sequence of all information, to reduce enabling overheads to some extent. In addition, a common part of all the information may be identified and enabled in a unified manner, to reduce enabling overheads caused by enabling the same information separately.

6. In this application, "preconfigure" may include "predefine", for example, define in a protocol. The "predefine" may be implemented by prestoring, in a device (for example, including network elements), corresponding code, a corresponding table, or other related information that may be used for indication. A specific implementation thereof is not limited in this application.

7. "Storage" or "store" in this application may mean "being stored" in one or more memories. The one or more memories may be separately disposed, or may be integrated into an encoder, a decoder, a processor, or a communication apparatus. Alternatively, a part of the one or more memories may be separately disposed, and a part of the one or more memories are integrated into the decoder, the processor, or the communication apparatus. A type of the memory may be a storage medium in any form. This is not limited.

8. The "protocol" in this application may be a standard protocol in the communication field, for example, may include a 4th generation (4th generation, 4G) network protocol, a 5th generation (5th generation, 5G) network protocol, an NR protocol, a 5.5G network protocol, a 6th generation (6th generation, 6G) network protocol, and a related protocol applied to a future communication system. This is not limited in this application.

9. Arrows or blocks shown by dashed lines in diagrams of the accompanying drawings in this specification of this application indicate optional steps or optional modules.

10. Unless otherwise specified, "/" represents an "or" relationship between associated objects. For example, A/B may represent A or B. "And/or" in this application describes only an association relationship between associated objects and represents that three relationships may exist. For example, A and/or B may represent the following three cases: Only A exists, both A and B exist, and only B exists, where A and B may be singular or plural.

First, a communication system to which an embodiment of this application is applicable is described.

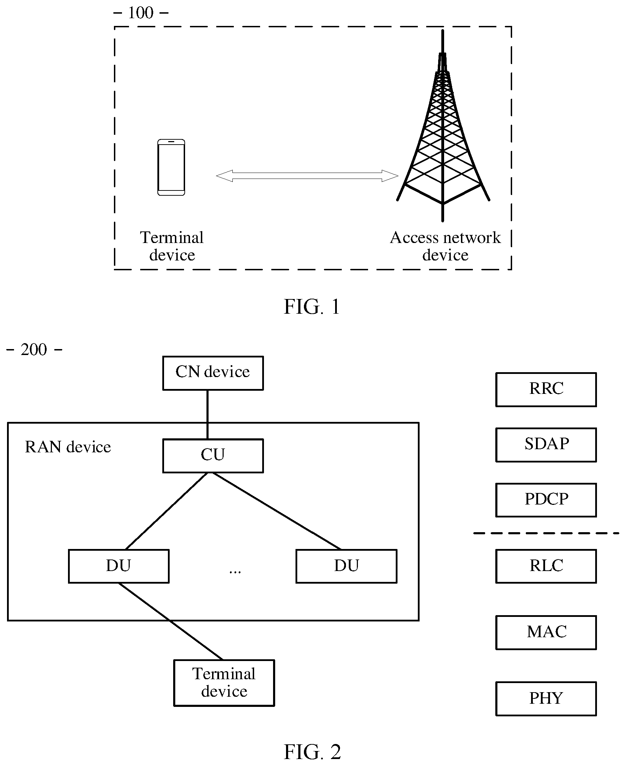

FIG. 1 is a diagram of a communication system 100 to which an embodiment of this application is applicable. As shown in FIG. 1, the communication system 100 includes an access network device and a terminal device.

Optionally, the communication system 100 may further include a core network (core network, CN) device (not shown in FIG. 1), for example, an access and mobility management function (access and mobility management function, AMF) network element.

The communication system 100 may further include more terminal devices. This is not limited.

In this embodiment of this application, the terminal device may be a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus.

In this embodiment of this application, the terminal device may alternatively be a satellite phone, a cellular phone, a smartphone, a wireless data card, a wireless modem, a machine-type communication device, cordless phone, a session initiation protocol (session initiation protocol, SIP) phone, a wireless local loop (wireless local loop, WLL) station, a personal digital assistant (personal digital assistant, PDA), a customer-premises equipment (customer-premises equipment, CPE), a smart point of sale (point of sale, POS) machine, a handheld device having a wireless communication function, a compute device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in vehicle-to-everything (vehicle-to-everything, V2X), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited.

In addition, the terminal device in this embodiment of this application may alternatively be a device having a communication function in a 6G communication system. A form, a type, or the like of the terminal device in the 6G communication system and another future communication system is not limited.

In this embodiment of this application, a communication apparatus configured to implement a function of the terminal device may be a terminal device, or may be an apparatus that can support the terminal device in implementing the function, for example, a chip system. The apparatus may be mounted in the terminal device or used in cooperation with the terminal device. In this application, the chip system may include a chip, or may include a chip and another discrete component.

In this embodiment of this application, the access network device is a device having a wireless transceiver function, and is configured to communicate with the terminal device. The access network device may be a node in a radio access network (radio access network, RAN), or may be referred to as a base station, or may be referred to as a RAN node. Alternatively, the access network device may be an evolved NodeB (evolved NodeB, eNB or eNodeB) in LTE, a base station in a 5G network such as a gNodeB (gNB), a base station in a public land mobile network (public land mobile network, PLMN) evolved after 5G, a broadband network service gateway (broadband network gateway, BNG), an aggregation switch, a 3rd generation partnership project (3rd generation partnership project, 3GPP) access device, or the like.

The RAN may be configured as a RAN defined in a 3GPP protocol, an open radio access network (open radio access network, O-RAN), a cloud access network (cloud radio access network, C-RAN), or the like. The access network device may further include base stations in various forms, for example, a macro base station, a micro base station (also referred to as a small cell), a relay station, a transmitting and receiving point (transmitting and receiving point, TRP), a transmitting point (transmitting point, TP), a mobile switching center, a device that functions as a base station in device-to-device (device-to-device, D2D) communication, vehicle-to-everything (vehicle-to-everything, V2X) communication, and machine-to-machine (machine-to-machine, M2M) communication, a network device in a non-terrestrial communication network (non-terrestrial network, NTN), and the like. This is not specifically limited.

In this embodiment of this application, the access network device may further include a network element or a module that implements some functions of the base station, for example, include one or more of the following: a central unit (central unit, CU), a distributed unit (distributed unit, DU), or a radio unit (radio unit, RU). Optionally, the CU may be further split into a CU-control plane (control plane, CP) and a CU-user plane (user plane, UP). Functions of the CU and the DU may be implemented by different network elements, or may be both implemented by a baseband unit (baseband unit, BBU) of the base station. A function of the RU may be implemented by a radio frequency device of the base station. For example, the radio frequency device of the base station may be a remote radio unit (remote radio unit, RRU), a pico remote radio unit (pico remote radio unit, pRRU), an active antenna unit (active antenna unit, AAU), or another unit, module, or device having a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In addition, the access network device in this embodiment of this application may alternatively be a device having a communication function in a 6G communication system. A form, a type, or the like of the access network device in the 6G communication system and another future communication system is not limited.

In this embodiment of this application, a communication apparatus configured to implement a function of the access network device may be an access network device, or may be an apparatus that can support the access network device in implementing the function, for example, a chip system. The apparatus may be mounted in the access network device or used in cooperation with the access network device. The chip system in this embodiment of this application may include a chip, or may include a chip and another discrete component.

In different communication systems, the CU (or the CU-CP and the CU-UP), the DU, or the RU may have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

It should be understood that a quantity of devices in the foregoing communication system is merely used as an example, and is not limited thereto. In actual application, the communication system may further include more terminal devices and more RAN devices, and may further include another device.

FIG. 2 is a diagram of a network architecture 200 to which an embodiment of this application is applicable. As shown in FIG. 2, the network architecture 200 includes a CN device, a RAN device, and a terminal device.

The RAN device includes a baseband apparatus and a radio frequency apparatus. The baseband apparatus may be implemented by one node, or may be implemented by a plurality of nodes. The radio frequency apparatus may be independently implemented by being disposed remotely from the baseband apparatus, or may be integrated into the baseband apparatus. Alternatively, some functions of the radio frequency apparatus are independently integrated, and some functions of the radio frequency apparatus are integrated into the baseband apparatus. For example, in an LTE communication system, a RAN device includes a baseband apparatus and a radio frequency apparatus. The radio frequency apparatus may be disposed remotely relative to the baseband apparatus. For example, an RRU is a remote radio unit disposed relative to a BBU.

Communication between the RAN device and the terminal device complies with a protocol layer structure. For example, a control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. A user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

The RAN device may implement functions of protocol layers such as an RRC layer, a PDCP layer, an RLC layer, and a MAC layer by using one node, or may implement the functions of these protocol layers by using a plurality of nodes. For example, in an evolved structure, the RAN device may include a CU and a DU, and a plurality of DUs may be all controlled by one CU. As shown in FIG. 2, for the CU and the DU, division may be performed based on a protocol layer of a radio network. For example, functions of the PDCP layer and a protocol layer above the PDCP layer are set on the CU, and functions of protocol layers below the PDCP layer, such as the RLC layer and the MAC layer, are set on the DU.

The division at such protocol layers is merely an example. The division may alternatively be performed at other protocol layers such as the RLC layer, so that the functions of the RLC layer and the protocol layers above the RLC layer are set on the CU and the functions of the protocol layers below the RLC layer are set on the DU. Alternatively, the division is performed within a protocol layer. For example, some functions of the RLC layer and the functions of the protocol layers above the RLC layer are set on the CU, and remaining functions of the RLC layer and the functions of the protocol layers below the RLC layer are set on the DU. In addition, division may alternatively be performed in another manner. For example, division is performed based on latency. A function whose processing time needs to meet a latency requirement is set on the DU, and a function whose processing time does not need to meet the latency requirement is set on the CU.

In addition, the radio frequency apparatus may be independently integrated, not placed in the DU, or may be integrated in the DU. Alternatively, a part of the radio frequency apparatus may be remotely integrated in the DU. This is not limited herein.

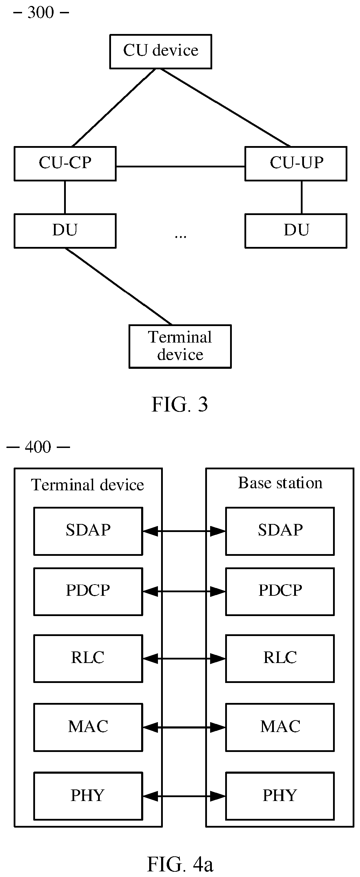

FIG. 3 is a diagram of a network architecture 300 to which an embodiment of this application is applicable. In comparison with the network architecture shown in FIG. 2, in FIG. 3, a CP and a UP of a CU may be further split and implemented by different entities, which are respectively a CU-CP entity and a CU-UP entity.

In the foregoing network architecture, signaling generated by the CU may be sent to the terminal device via the DU, or signaling generated by the terminal device may be sent to the CU via the DU. The DU may transparently transmit the signaling to the terminal device or the CU by directly encapsulating the signaling at a protocol layer without parsing the signaling. In the following embodiments, if transmission of such signaling between the DU and the terminal device is involved, sending or receiving of the signaling by the DU includes this scenario. For example, signaling of the RRC or the PDCP layer is finally processed as signaling of the PHY layer, to be sent to the terminal device, or is converted from received signaling of the PHY layer. In this architecture, it may also be considered that the signaling at the RRC layer or the PDCP layer is sent by the DU, or sent by the DU and radio frequency loading.

The network architecture shown in FIG. 1, FIG. 2, or FIG. 3 is applicable to communication systems of various radio access technologies (radio access technology, RAT), for example, may be an LTE communication system, or may be a 5G communication system, or may be a transition system between an LTE communication system and a 5G communication system. The transition system may also be referred to as a 4.5G communication system, and certainly may alternatively be a future communication system.

The network architectures and service scenarios that are described in this application are intended to describe the technical solutions in embodiments of this application more clearly, but do not constitute a limitation on the technical solutions provided in this application. A person of ordinary skill in the art may learn that, with evolution of a communication network architecture and emergence of a new service scenario, the technical solutions provided in this application are also applicable to similar technical problems. For example, this application is applicable to a V2X scenario.

It should be understood that the network architectures shown in FIG. 1 to FIG. 3 are merely examples for description, and do not have any limitation function. Embodiments of this application are further applicable to another network architecture, where, for example, a base station and a core network are not distinguished, that is, the base station and the core network may belong to a same network device. The network device communicates with the terminal device; or the terminal device communicates with the terminal device.

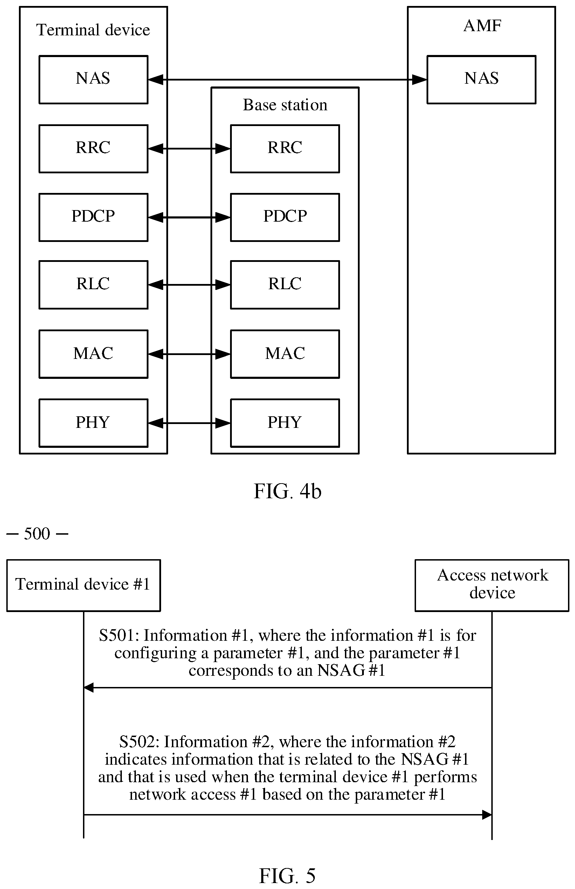

An NR protocol architecture in embodiments of this application may be divided into a user-plane protocol stack and a control-plane protocol stack. The following describes the foregoing two protocol stacks with reference to FIG. 4a and FIG. 4b.

FIG. 4a and FIG. 4b are diagrams of a protocol stack 400 according to an embodiment of this application. FIG. 4a and FIG. 4b are described by using interaction between a terminal device and a base station as an example. FIG. 4a shows the user-plane protocol stack, and FIG. 4b shows the control-plane protocol stack.

The user-plane protocol stack is a protocol cluster used for user data transmission. As shown in FIG. 4a, the user-plane protocol stack may include five layers: a PHY layer, a MAC layer, an RLC layer, a PDCP layer, and an SDAP layer.

An architecture of the control-plane protocol stack is a protocol cluster used for control signaling transmission of a system. As shown in FIG. 4b, the control-plane protocol stack may include a non-access stratum (non-access stratum, NAS), an RRC layer, a PDCP layer, an RLC layer, a MAC layer, and a PHY layer.

For example, the PHY layer may be responsible for processing one or more of encoding and decoding, modulation and demodulation, multi-antenna mapping, and another physical layer function. For example, the MAC layer may be responsible for one or more of hybrid automatic repeat request (hybrid automatic repeat request, HARQ), uplink scheduling, downlink scheduling, and the like. For example, the RLC layer may be responsible for one or more of segmentation, reassembly, retransmission processing, and the like. For example, the PDCP layer may be responsible for one or more of header compression/decompression, security (an encryption function and an integrity protection function), retransmission, in-order delivery, and the like. For example, the RRC layer may be responsible for one or more of functions such as broadcast, paging, RRC connection management, radio bearer control, mobility management, and terminal device measurement reporting and control. For example, the NAS layer may be responsible for one or more of functions such as identity verification, mobility management, and security control.

For the user-plane protocol stack, an NR protocol stack has an SDAP layer in comparison with an LTE protocol stack. For the control-plane protocol stack, the NR protocol stack is similar to the LTE protocol stack.

Optionally, each layer in the protocol stack may be replaced with an entity. For example, the PDCP layer may be replaced with a PDCP entity, and the SDAP layer may be replaced with an SDAP entity. Unified descriptions are provided herein, and details are not described below again.

For ease of understanding and description, related terms in embodiments of this application are briefly described below.

Network slice: Network slices are logical networks that are customized based on different service requirements or tenants and that have different network capabilities and network characteristics on a physical or virtual network infrastructure.

The network slice may be a complete end-to-end network including a terminal device, an access network, a transmission network, a core network, and an application server, can provide a telecommunication service, and has a specific network capability. The network slice may alternatively be any combination of the terminal device, the access network, the transmission network, the core network, and the application server. For example, the network slice includes only the access network and the core network. The network slice may have one or more of the following characteristics: The access network may support a network slice, or may not support a network slice, and the access network may be shared by a plurality of network slices. Different network slices may have different characteristics and include different network functional modules.

A network slice identifier may include but is not limited to at least one of the following: network slice type information, service type information, tenant (Tenant) information, user group information, slice group information, network slice instance information, a dedicated core network (dedicated core network, DCN) identifier, single network slice selection assistance information (single network slice selection assistance information, S-NSSAI), S-NSSAI group information, a temporary identifier (Temporary ID), R-NSSAI (RAN-NSSAI), and a network slice differentiator (slice differentiator, SD).

The foregoing terms are defined as follows:
➢ Network slice type information: For example, the network slice type information may indicate network slice types such as an enhanced mobile broadband (enhanced mobile broadband, eMBB) service, ultra-reliable low-latency communication (ultra-reliable low-latency communication, URLLC), and massive machine type communication (massive machine type communication, mMTC). Optionally, the network slice type information may alternatively indicate an end-to-end network slice type, including a RAN-to-CN network slice type; or may indicate a RAN-side network slice type or a CN-side network slice type.
➢ Network slice selection assistance information (network slice selection assistance information, NSSAI): The NSSAI is a value defined in a standard or a private value defined in a PLMN. One piece of NSSAI includes a plurality of pieces of S-NSSAI, and each piece of S-NSSAI may correspond to one specific slice.
➢ Single network slice selection assistance information (single-nssai, S-NSSAI): The S-NSSAI may include two values: a slice/service type (slice/service type, SST) and a network slice differentiator (slice differentiator, SD), or may include only a slice/service type.
➢ Slice/Service type: The slice/service type represents a feature and a service that a network is expected to provide.
➢ Network slice differentiator: The network slice differentiator indicates that a network slice instance is selected as supplementary information for a slice/service type. When the slice/service type is for a plurality of network slice instances, the network slice differentiator may further distinguish between these network slice instances.
➢ S-NSSAI: The S-NSSAI may include at least slice/service type (slice/service type, SST) information, and optionally, may further include slice differentiator (slice differentiator, SD) information. The SST information indicates a behavior of a network slice, such as a feature and a service type of the network slice. The SD information is complementary information of an SST. If the SST is for a plurality of network slices, the SD may correspond to a unique network slice instance.

Network slice access stratum group (network slice access stratum group, NSAG): The NSAG is a group including a plurality of network slices. A network access stratum (access stratum, AS) usually configures a corresponding cell reselection (cell reselection) parameter, a corresponding random access channel (random access channel, RACH) parameter, and the like for each NSAG. A terminal device may perform cell reselection, random access, and the like based on the foregoing parameters.

Each NSAG is identified by using an NSAG identifier (NSAG ID). In addition, each NSAG includes one or more network slices.

A communication method, a communication apparatus, and a system in embodiments of this application are described below with reference to the accompanying drawings.

For ease of understanding and description, the communication method in embodiments of this application is described below by using interaction between a terminal device #1 and an access network device as an example. However, this should not constitute any limitation on an execution entity of the communication method in embodiments of this application. For example, the terminal device #1 may be replaced with a component (for example, a circuit, a chip, or a chip system) disposed in the terminal device #1, and the access network device may be replaced with a component (for example, a circuit, a chip, or a chip system) disposed in the access network device.

FIG. 5 is a schematic interaction flowchart of a communication method 500 according to an embodiment of this application. As shown in FIG. 5, the method 500 includes the following steps.

S501: An access network device sends information #1 (for example, first information) to a terminal device #1.

Correspondingly, the terminal device #1 receives the information #1. The information #1 is for configuring a parameter #1 (for example, a first parameter), and the parameter #1 corresponds to a network slice access stratum group #1. For example, the parameter #1 can be used by the terminal device to initiate network access #1 (for example, first network access) on an NSAG #1. For example, the terminal device can initiate the network access #1 on the NSAG #1 based on the parameter #1.

In a possible implementation, the network access #1 may be at least one of cell reselection or random access. For example, the network access #1 is the cell reselection, or the network access #1 is the random access; or the network access #1 is both the cell reselection and the random access.

For example, the network access #1 is the cell reselection, and the parameter #1 is a parameter used by the terminal device #1 to perform the cell reselection on the NSAG #1. That is, the terminal device #1 may perform the cell reselection on the NSAG #1 based on the parameter #1.

For example, the network access #1 is the random access, and the parameter #1 is a parameter used by the terminal device #1 to perform the random access on the NSAG #1. That is, the terminal device #1 may perform the random access on the NSAG #1 based on the parameter #1.

For example, the network access #1 is both the cell reselection and the random access, and the parameter #1 is a parameter used by the terminal device #1 to perform the cell reselection and the random access on the NSAG #1. That is, the terminal device #1 may perform both the cell reselection and the random access on the NSAG #1 based on the parameter #1.

For example, the network access #1 is the cell reselection, and the parameter #1 is a cell reselection parameter and may include:
- information about a carrier frequency, where the information may be an index corresponding to the carrier frequency. For example, an index 0 represents a frequency of a carrier currently selected by the terminal device #1, and indexes 1 to N represent frequencies of neighboring carriers indicated in a broadcast message; and
- information about one or more NSAGs supported by a carrier, where information about each NSAG includes:
   ✧ an NSAG identifier (NSAG Identifier, NSAG ID); and
   ✧ a reselection priority (reselection priority) of the NSAG, where a value of the reselection priority of the NSAG may be an integer, and a larger value indicates a higher reselection priority.

The reselection priority of the NSAG is determined by the access network device based on factors such as carrier load and importance of the NSAG. In addition, the reselection priority of the NSAG can be used by the terminal device for carrier selection during cell reselection. For detailed descriptions, refer to the following descriptions of a carrier selection rule.

For example, the network access #1 is the random access, and the parameter #1 is a random access configuration parameter and may include at least one of the following (this is not limited):
- an NSAG identifier;
- a quantity of preambles (preambles) corresponding to a signal based on which the random access is performed, where the signal based on which the random access is performed may be a synchronization signal block (synchronization signal block, SSB), a channel state information reference signal (channel state information reference signal, CSI-RS), or the like, and this is not limited;
- a power ramping step (power ramping step) (optional parameter), indicating a value of power ramping in a random access procedure; and
- a back-off scaling factor (scaling factor for back-off indicator) (optional parameter), indicating a scaling factor for a back-off operation in the random access procedure.

After receiving the information #1, the terminal device #1 may initiate the network access #1 on the NSAG #1 based on the parameter #1 configured based on the information #1. The terminal device #1 may record related information when the network access #1 is initiated on the NSAG #1.

For example, if the network access #1 is the random access, the terminal device #1 may record information (for example, a quantity of random access attempts and reconnection time after link failure) about a process such as random access, radio link failure, or mobility performed in a cell (where the cell is associated with or corresponds to the NSAG #1, or the cell supports the NSAG #1), and report the information to the access network device. The access network device adjusts a parameter (for example, a RACH parameter or a cell handover parameter) at the granularity of the NSAG #1 based on the information.

For example, if the network access #1 is the cell reselection, the terminal device #1 may record a selected NSAG, a priority (priority) of one or more maintained NSAGs, an NSAG whose priority is the same as a priority of the selected NSAG among the one or more maintained NSAGs, and an NSAG with a highest priority among the one or more maintained NSAGs.

S502: The terminal device #1 sends information #2 (for example, second information) to the access network device.

Correspondingly, the access network device receives the information #2. The information #2 indicates information that is related to the NSAG #1 and that is used when the terminal device #1 performs the network access #1 based on the parameter #1.

For example, the network access #1 is the random access, and the information related to the NSAG #1 may include identification information of an NSAG selected by the terminal device #1. When the network access is the random access, adjustment of a random access-related parameter configuration at the NSAG granularity may be supported in this embodiment of this application.

For example, the network access #1 is the cell reselection, and the information related to the NSAG #1 may include identification information of an NSAG selected by the terminal device #1. When the network access is the cell reselection, adjustment of a cell reselection-related parameter configuration at the NSAG granularity may be supported in this embodiment of this application.

In the foregoing solution, the information #2 may be carried in radio resource control (radio resource control, RRC) signaling, for example, a user equipment information response (UE Information Response) message. In this way, the information related to the NSAG #1 can be reported to the access network device by using existing information.

In conclusion, after performing the network access #1 based on the parameter #1, the terminal device #1 may report the information related to the NSAG #1 to the access network device, and the access network device may adjust, based on the information, a parameter previously configured by an access network device #1 for the NSAG #1.

In the foregoing solution, the terminal device #1 may initiate the network access #1 on the NSAG #1 based on the parameter #1 configured by the information #1, and may record the information related to the NSAG #1, for example, identification information of an NSAG selected by the terminal device #1 or NSAG priority information related to the NSAG selected by the terminal device #1.

Further, the terminal device #1 reports the information related to the NSAG #1 to the access network device, and the access network device may adjust a parameter configuration at the NSAG granularity based on the information. For example, the access network device may adjust a cell reselection parameter of the NSAG #1 or a random access configuration parameter of the NSAG #1 based on the information related to the NSAG #1.

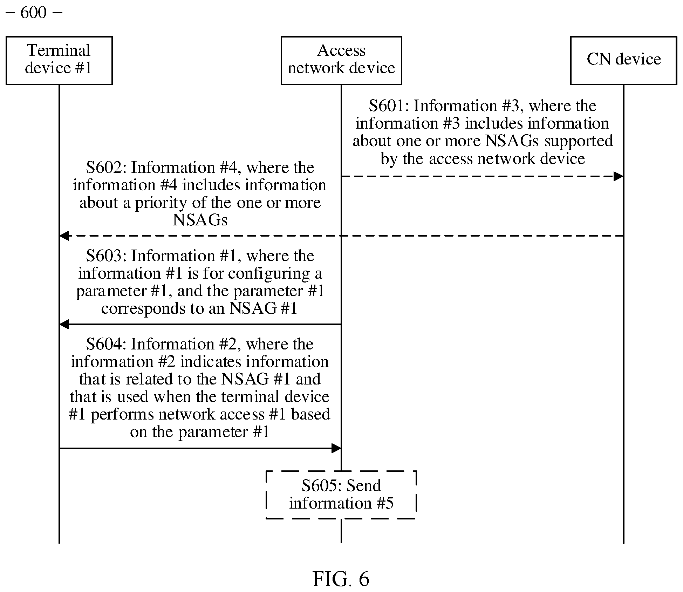

The method shown in FIG. 5 is further described below with reference to FIG. 6 to FIG. 9.

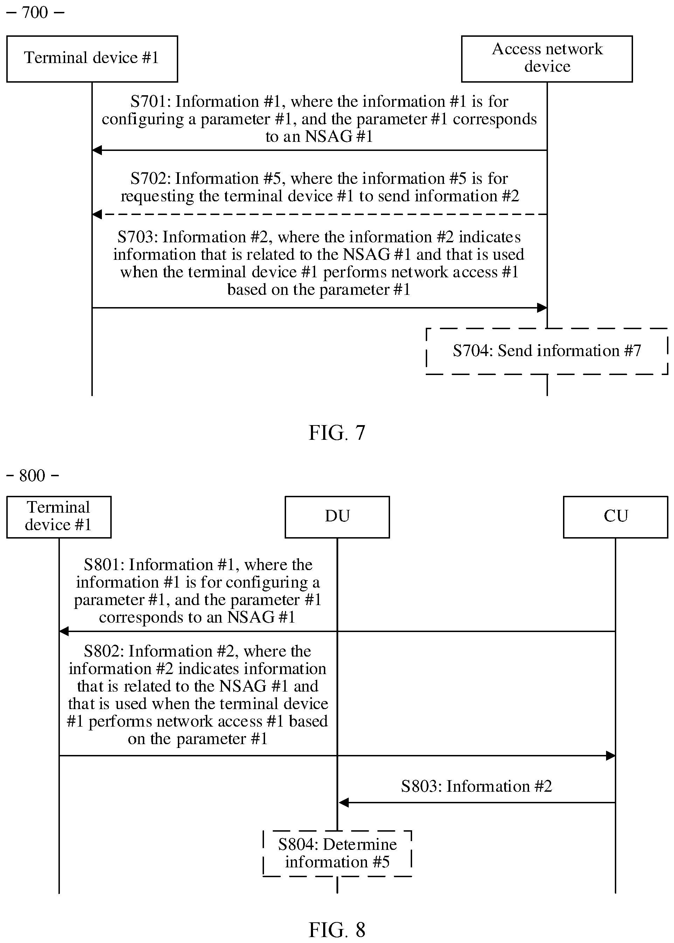

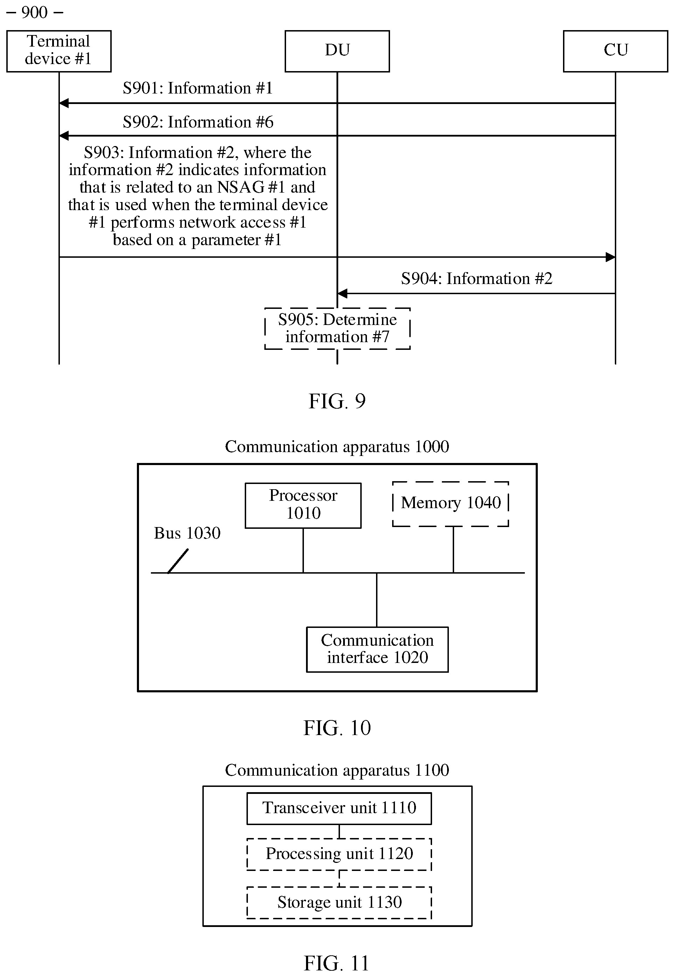

It should be noted that content shown in FIG. 6 and FIG. 8 is described by using an example in which the network access #1 is the cell reselection, and content shown in FIG. 7 and FIG. 9 is described by using an example in which the network access #1 is the random access.

FIG. 6 is a schematic interaction flowchart of a communication method 600 according to an embodiment of this application. As shown in FIG. 6, the method 600 includes the following steps.

Optionally, S601: An access network device sends information #3 to a CN device.

Correspondingly, the CN device receives the information #3. The information #3 includes information about one or more NSAGs supported by the access network device. For ease of description, an example in which the access network device supports an NSAG #1, an NSAG #2, and an NSAG #3 is used below for description. However, a scenario in which the access network device supports more NSAGs is not limited.

For example, the information #3 includes information about the NSAG #1, information about the NSAG #2, and information about the NSAG #3.
(1) The information about the NSAG #1 includes:
   - an identifier of the NSAG #1; and
   - one or more network slice identifiers (network slice identifiers) corresponding to the NSAG #1, where the identifier may be S-NSSAI.
(2) The information of the NSAG #2 includes:
   - an identifier of the NSAG #2; and
   - one or more network slice identifiers corresponding to the NSAG #2.
(3) The information about the NSAG #3 includes:
   - an identifier of the NSAG #3; and
   - one or more network slice identifiers corresponding to the NSAG #3.

Optionally, S602: The CN device sends information #4 to a terminal device #1.

Correspondingly, the terminal device #1 receives the information #4. The information #4 includes information about priorities that are respectively determined by the CN device for the NSAG #1, the NSAG #2, and the NSAG #3 based on factors such as a policy of a network. For example, the CN device may assign a higher priority to an NSAG serving an important service or an important user, and assign a lower priority to an NSAG serving an unimportant service or an unimportant user.

Further, the information #4 includes the information about the NSAG #1, the information about the NSAG #2, and the information about the NSAG #3.
(1) The information about the NSAG #1 includes:
   - the identifier of the NSAG #1;
   - the one or more network slice identifiers corresponding to the NSAG #1; and
   - the priority of the NSAG #1, where a value of the priority may be an integer, and a smaller value indicates a higher priority.
(2) The information of the NSAG #2 includes:
   - the identifier of the NSAG #2;
   - the one or more network slice identifiers corresponding to the NSAG #2; and
   - the priority of the NSAG #3, where a value of the priority may be an integer, and a smaller value indicates a higher priority.
(3) The information about the NSAG #3 includes:
   - the identifier of the NSAG #3;
   - the one or more network slice identifiers corresponding to the NSAG #3; and
   - the priority of the NSAG #3, where a value of the priority may be an integer, and a smaller value indicates a higher priority.

In this way, the terminal device #1 can obtain the information about the priorities of the three NSAGs supported by the access network device.

S603: The access network device sends information #1 to the terminal device #1.

Correspondingly, the terminal device receives the information #1.

For ease of description, an example in which the information #1 is for configuring three parameters is used below for description. For example, the information #1 is for configuring a parameter #1, a parameter #2, and a parameter #3. The parameter #1 corresponds to the NSAG #1, and the parameter #1 is for initiating network access #1 (for example, cell reselection #1) on the NSAG #1. The parameter #2 corresponds to the NSAG #2, and the parameter #2 is for initiating network access #2 (for example, cell reselection #2) on the NSAG #2. The parameter #3 corresponds to the NSAG #3, and the parameter #3 is for initiating network access #3 (for example, cell reselection #3) on the NSAG #3.

The parameter #1 may include:
- frequency information of a carrier #1; and
- the carrier #1 supports the NSAG #1, where a reselection priority of the NSAG #1 is 2.

The parameter #2 may include:
- frequency information of a carrier #2; and
- the carrier #2 supports the NSAG #2, where a reselection priority of the NSAG #2 is 1.5.

The parameter #3 may include:
- frequency information of a carrier #3; and
- the carrier #3 supports the NSAG #3, where a reselection priority of the NSAG #3 is 1.

In this way, the terminal device #1 can obtain frequency information of each carrier, an NSAG supported by each carrier, and information about reselection priorities of the NSAGs, and the terminal device #1 may perform cell reselection based on the information. When performing the cell reselection, the terminal device #1 may first select a carrier, and then select, on the carrier, a cell with a strongest signal for access.

For example, a carrier selection rule #1 may be: selecting a carrier corresponding to an NSAG with a highest "NSAG priority"; and if there are a plurality of NSAGs with a highest priority, selecting a carrier corresponding to an NSAG with a highest reselection priority in these NSAGs. Therefore, if the priority of the NSAG #1 is higher than the priority of the NSAG #2 and the priority of the NSAG #3, the terminal device #1 selects a carrier corresponding to the NSAG #1. If the priority of the NSAG #1 is the same as the priority of the NSAG #2 and is higher than the priority of the NSAG #3, the reselection priority of the NSAG #1 is higher than the priority of the NSAG #2, and so on, the terminal device #1 selects the carrier corresponding to the NSAG #1.

For another example, a carrier selection rule #2 may be: selecting a carrier corresponding to an NSAG with an "NSAG priority" higher than a threshold; and if priorities of a plurality of NSAGs are all higher than the threshold, selecting a carrier corresponding to an NSAG with a highest reselection priority in these NSAGs. Therefore, if both the priority of the NSAG #1 and the priority of the NSAG #2 are higher than the threshold, the reselection priority of the NSAG #1 is higher than the priority of the NSAG #2, and so on, the terminal device #1 selects a carrier corresponding to the NSAG #1.

For ease of description, an example of the carrier selection rule #2 is used below for description. For example, both the priority of the NSAG #1 and the priority of the NSAG #2 are higher than the threshold, and the reselection priority of the NSAG #1 is higher than the reselection priority of the NSAG #2. The terminal device #1 selects, according to the carrier selection rule #2, the carrier #1 corresponding to the NSAG #1 to perform cell access.

In addition, the terminal device #1 may record information that is related to the NSAG #1 and that is used when the cell reselection #1 is performed based on the parameter #1. For example, the information related to the NSAG #1 includes at least one of the following:
- an NSAG (for example, the NSAG #1) selected by the terminal device #1;
- an NSAG that is with a priority higher than a priority of an NSAG selected by the terminal device #1 and that is in one or more NSAGs maintained by the terminal device #1;
- an NSAG that is with a priority the same as the priority of the NSAG selected by the terminal device #1 and that is in the one or more NSAGs maintained by the terminal device #1; and
- an NSAG with a highest priority among the one or more NSAGs maintained by the terminal device #1.

In this way, the access network device can adjust, based on the foregoing information, a cell reselection-related parameter configuration at the NSAG granularity, for example, adjust information about a reselection priority of a part of network slice access stratum groups, so that the terminal device does not select a high-load carrier for access when performing cell reselection.

S604: The terminal device #1 sends information #2 to the access network device.

In a possible implementation, the information #2 may include at least one of the following:
identification information of the NSAG #1 or identification information of an NSAG*.

The NSAG* may be an NSAG with a priority higher than the priority of the NSAG #1, or may be an NSAG with a priority the same as or equal to the priority of the NSAG #1.

In a possible implementation, the NSAG* may alternatively be an NSAG with a highest priority. In this way, the access network device can obtain identification information of the network slice access stratum group with the highest priority among the one or more network slice access stratum groups maintained by the terminal device.

In a possible implementation, identification information of an NSAG may be an identifier of the NSAG, or may be information related to the identifier of the NSAG. For example, when an index is used for associating the identifier of the NSAG, the index associated with the identifier of the NSGA is an example of the foregoing identification information of the NSAG, but other possibilities are not limited.

For example, when the terminal device #1 reports the identification information of the NSAG #1 to the access network device, and does not report identification information of another NSAG to the access network device, the access network device may adjust a reselection priority of the another NSAG, for example, adjust the reselection priority of the NSAG #2 and the reselection priority of the NSAG #3 to 2.5 and 3.5 respectively.

For another example, when the terminal device #1 reports the identification information of the NSAG #1 to the access network device, and does not report identification information of another NSAG to the access network device, the access network device may adjust the reselection priority of the NSAG #1, for example, adjust the reselection priority of the NSAG #1 to 0.5.

For still another example, when the terminal device #1 reports the identification information of the NSAG* to the access network device, and does not report the identification information of the NSAG #1 and the identification information of the NSAG* to the access network device, the access network device may adjust the reselection priority of the NSAG* to 5, and may adjust the reselection priority of the NSAG #1 to 1.2.

It should be noted that, when the terminal device #1 reports identification information of a plurality of NSAGs to the access network device, the identification information of the plurality of NSAGs may be arranged in ascending order or descending order of priorities of the NSAGs. In this way, the access network device can distinguish between priorities of the plurality of NSAGs reported by the terminal device #1, to re-adjust reselection priorities of the plurality of NSAGs. A specific adjustment manner is not limited.

It should be further noted that the access network device may send, to the terminal device #1, request information for requesting the terminal device #1 to send the information #2. Correspondingly, the terminal device #1 may send the information #2 to the access network device based on a request of the access network device. In this way, the terminal device #1 can send the information #2 to the access network device based on the request of the access network device.

In a possible implementation, the information #2 is sent by the terminal device #1 after the terminal device #1 enters a connected state. In this way, the terminal device #1 can avoid frequently entering the connected state to report the information #2, so as to reduce energy consumption of the terminal.

Optionally, S605: The access network device sends information #5 (for example, third information).

The access network device may send the information #5 to another terminal device (for example, a terminal device #2), or may send the information #5 to the terminal device #1. This is not limited.

The access network device determines the information #5 based on the information #2. The information #5 can be for configuring a parameter #4 (for example, a second parameter). The parameter #4 may be used by the terminal device #2 to perform network access #4. For content included in the information #5, refer to Table 1. Content shown in Table 1 is merely used as an example for understanding, and is not used as a final limitation.

**Table 1**

| | |
|---|---|
| Carrier #1 | Frequency of the carrier #1 |
| | The reselection priority of the NSAG #1 is 0.5. |
| Carrier #2 | Frequency of the carrier #2 |
| | The reselection priority of the NSAG #2 is 2.5. |
| Carrier #3 | Frequency of the carrier #3 |
| | The reselection priority of the NSAG #3 is 3. |

As shown in Table 1, the information #5 includes information about the carrier #1, information about the carrier #2, and information about the carrier #3. The information about the carrier #1 includes the frequency of the carrier #1 and the reselection priority of the NSAG #1 being 0.5. The information about the carrier #2 includes the frequency of the carrier #2 and the reselection priority of the NSAG #2 being 2.5. The information about the carrier #3 includes the frequency of the carrier #3 and the reselection priority of the NSAG #3 being 3.

In this way, the terminal device #2 can select the carrier #2 instead of the carrier #1 according to the carrier selection rule #2.

Specifically, before the access network device receives the information #2, the information about the three carriers configured by the access network device for the terminal device #1 is separately as follows:
- The carrier #1 supports the NSAG #1, where the reselection priority of the NSAG #1 is 2.
- The carrier #2 supports the NSAG #2, where the reselection priority of the NSAG #2 is 1.5.
- The carrier #3 supports the NSAG #3, where the reselection priority of the NSAG #3 is 1.

For example, the information #2 sent by the terminal device #1 displays the following:
- An NSAG currently selected by the terminal device #1 is the NSAG #1.
- The priority of NSAG* is the same as the priority of the NSAG #1.

When the access network device finds that load of the carrier #1 is excessively high, the following adjustment may be performed: adjusting the reselection priority of the NSAG* to be high, and keeping the reselection priority of the NSAG #1 unchanged. In the foregoing adjustment manner, the terminal device #2 may be guided to reselect and access another carrier (for example, a carrier corresponding to the NSAG*), so as to reduce the load of the carrier #1.

For another example, the information #2 sent by the terminal device #1 displays the following:
- An NSAG currently selected by the terminal device #1 is the NSAG #1.
- The priority of NSAG* is higher than the priority of the NSAG #1.

When the access network device finds that load of the carrier #1 is excessively high, the following adjustment may be performed: adjusting the reselection priority of the NSAG* to be high, and keeping the reselection priority of the NSAG #1 unchanged. In the foregoing adjustment manner, the terminal device #2 may be guided to reselect and access another carrier (for example, a carrier corresponding to the NSAG*), so as to reduce the load of the carrier #1.

For still another example, the information #2 sent by the terminal device #1 displays the following:
- An NSAG currently selected by the terminal device #1 is the NSAG #1.
- The priority of the NSAG* is the highest.

When the access network device finds that load of the carrier #1 is excessively high, the following adjustment may be performed: adjusting the reselection priority of the NSAG* to be high, and keeping the reselection priority of the NSAG #1 unchanged. In the foregoing adjustment manner, the terminal device #2 may be guided to reselect and access another carrier (for example, a carrier corresponding to the NSAG*), so as to reduce the load of the carrier #1.

In conclusion, the terminal device #1 may report, to the access network device, the information that is related to the NSAG #1 and that is used when the terminal device #1 performs the network access #1 based on the parameter #1, and the access network device may adjust a parameter of the NSAG #1 based on the information related to the NSAG #1, so that a requirement of another terminal device for network access can be met. For example, the terminal device #1 reports the information #2, and the access network device determines a value relationship between priorities of the NSAGs based on the information #2. In this way, reselection priorities of the NSAGs can be adjusted, so that another terminal device selects another carrier to perform cell reselection, so as to reduce the load of the carrier #1.

According to the foregoing solution, adjustment of a parameter configuration at the NSAG granularity by the access network device can be supported in this embodiment of this application.

It should be noted that some steps in the solution in FIG. 6 may be optional. For example, S601 is optional, and S602 is optional. Therefore, the foregoing descriptions are merely used as an example for understanding, and are not used as a final limitation.

FIG. 7 is a schematic interaction flowchart of a communication method 700 according to an embodiment of this application. As shown in FIG. 7, the method 700 includes the following steps.

S701: An access network device sends information #1 to a terminal device #1.

Correspondingly, the terminal device #1 receives the information #1.

The information #1 includes one or more pieces of random access (random access channel, RACH) configuration information. For ease of description, an example in which the access network device supports RACH configuration information #1, RACH configuration information #2, and RACH configuration information #3 is used below for description. However, a scenario in which the access network device supports more pieces of RACH configuration information is not limited.

For example, the information #1 includes the RACH configuration information #1, the RACH configuration information #2, and the RACH configuration information #3.
(1) The RACH configuration information #1 includes:
   - an identifier of the NSAG #1;
   - a quantity of preambles corresponding to a signal based on which the random access is performed, where for example, the quantity may be 10;
   - a power ramping step; and
   - a back-off scaling factor.
(2) The RACH configuration information #2 includes:
   - an identifier of the NSAG #2;
   - a quantity of preambles corresponding to a signal based on which the random access is performed, where for example, the quantity may be 15;
   - a power ramping step; and
   - a back-off scaling factor.
(3) The RACH configuration information #3 includes:
   - an identifier of the NSAG #3;
   - a quantity of preambles corresponding to a signal based on which the random access is performed, where for example, the quantity may be 20;
   - a power ramping step; and
   - a back-off scaling factor.

It should be noted that the quantity of preambles corresponding to the signal based on which the random access is performed may be a quantity of times of sending a preamble by the terminal device #1 on the signal based on which the random access is performed or a quantity of preambles sent by the terminal device #1 on the signal based on which the random access is performed. For example, if the terminal device #1 successfully performs access after attempting to send the preamble five times in a random access procedure, the quantity of preambles included in the information #2 is 5.

The terminal device #1 may determine, based on a selected NSAG (where the NSAG #1 is used as an example) and the received RACH configuration information #1, a parameter used for random access, and initiate the random access (which may be network access #1). For example, the terminal device #1 may calculate, based on a quantity of preambles corresponding to a signal based on which each time of random access is performed, a set of available preambles for selection, and select a preamble for random access. The terminal device #1 determines, based on the power ramping step and the back-off scaling factor, power and back-off time that are used in each access attempt.

Optionally, S702: The access network device sends information #6 to the terminal device #1, where the information #6 is for requesting the terminal device #1 to send information #2.

Correspondingly, the terminal device #1 receives the information #6.

In a possible implementation, the information #6 may be request information, query information, indication information, or the like. The terminal device #1 may determine, based on the information #6, that the information #2 needs to be sent or reported to the access network device.

S703: The terminal device #1 sends the information #2 to the access network device.

Correspondingly, the access network device receives the information #2. The information #2 includes at least one of the following:
- a cell identifier;
- the identifier of the NSAG #1;
- an index of a signal based on which the random access is performed; and
- a quantity of preambles corresponding to the signal based on which the random access is performed.

In this way, the access network device can obtain related information used when the terminal device #1 performs the random access on the NSAG #1.

There is an association relationship between the signal based on which the random access is performed and the cell identifier and the NSAG #1. For example, the signal based on which the random access is performed is configured for the NSAG #1, or the terminal device #1 initiates random access on the NSAG #1 by using the signal based on which the random access is performed.

In addition, a cell indicated by the cell identifier may support one or more NSAGs, and the one or more NSAGs include the NSAG #1.

In a possible implementation, the information #2 is sent by the terminal device #1 after the terminal device #1 enters a connected state. In this way, the terminal device #1 can avoid frequently entering the connected state to report the information #2, so as to reduce energy consumption of the terminal.

Optionally, S704: The access network device sends information #7 (for example, third information).

For example, the access network device may send the information #7 to another terminal device (for example, a terminal device #2), or may send the information #7 to the terminal device #1. This is not limited.

In this way, the access network device can send, to the another terminal device, a new parameter configuration obtained through adjustment of a parameter configuration at the granularity of an NSAG #1, so that the another terminal device can perform network access or the like based on the parameter configuration obtained through the adjustment.

The information #7 is determined by the access network device based on the information #2. The information #7 can be for configuring a parameter #4 (for example, a second parameter). The parameter #4 may be used by the terminal device #2 to perform network access #4.

Specifically, the access network device may adjust, based on the information #2, a RACH configuration corresponding to the NSAG #1. For example, if a value of "a quantity of preambles corresponding to a signal based on which the random access is performed" that is associated with the NSAG #1 is large, it indicates that a quantity of preambles currently configured for the NSAG #1 is insufficient, and the access network device needs to increase the quantity of preambles corresponding to the NSAG #1.

For example, the information #7 may include:
(1) the RACH configuration information #1, including:
   - the identifier of the NSAG #1;
   - a quantity of preambles corresponding to a signal based on which the random access is performed, where for example, the quantity may be 25;
   - a power ramping step; and
   - a back-off scaling factor;
(2) the RACH configuration information #2, including:
   - the identifier of the NSAG #2;
   - a quantity of preambles corresponding to a signal based on which the random access is performed, where for example, the quantity may be 15;
   - a power ramping step; and
   - a back-off scaling factor; and
(3) the RACH configuration information #3, including:
   - the identifier of the NSAG #3;
   - a quantity of preambles corresponding to a signal based on which the random access is performed, where for example, the quantity may be 20;
   - a power ramping step; and
   - a back-off scaling factor.

In this way, the terminal device #2 can initiate random access based on the RACH configuration information #1 (if the NSAG #1 is selected).

In conclusion, the terminal device #1 may report, to the access network device, the information that is related to the NSAG #1 and that is used when the terminal device #1 performs the network access #1 based on a parameter #1, and the access network device may adjust a parameter of the NSAG #1 based on the information related to the NSAG #1, so that a requirement of another terminal device for network access can be met. For example, the terminal device #1 reports the information #2, and the access network device may determine, based on the information #2, that a quantity of preambles configured for the NSAG #1 is insufficient. In this way, the quantity of preambles configured for the NSAG #1 can be adjusted, so that another terminal device can complete random access with low overheads when selecting the NSAG #1.

According to the foregoing solution, adjustment of a parameter configuration at the NSAG granularity by the access network device can be supported in this embodiment of this application.

It should be noted that some steps in the solution in FIG. 7 may be optional. For example, S702 is optional, and S704 is optional. Therefore, the foregoing descriptions are merely used as an example for understanding, and are not used as a final limitation.

Content in FIG. 6 and FIG. 7 is described by using an example in which the access network device does not use a CU-DU split architecture. The following describes, with reference to FIG. 8 and FIG. 9, that an access network device uses a CU-DU split architecture to perform the foregoing methods.

It should be noted that the access network device can perform cloud-based deployment and the like by using a CU-DU split architecture in embodiments of this application. Specifically, a DU is responsible for a protocol layer having a high real-time requirement, and a CU is responsible for a protocol layer having a low real-time requirement. The DU needs to be deployed as close as possible to an antenna. The CU may be far away from the antenna, and a plurality of CUs may be centrally deployed on a cloud, to implement resource sharing.

FIG. 8 is a schematic interaction flowchart of a communication method 800 according to an embodiment of this application. As shown in FIG. 8, the method 800 includes the following steps.

S801: A CU sends information #1 to a terminal device #1.

Correspondingly, the terminal device #1 receives the information #1.

For detailed descriptions, refer to S603. Details are not described again.

S802: The terminal device #1 sends information #2 to the CU.

Correspondingly, the CU receives the information #2.

For detailed descriptions, refer to S604. Details are not described again.

S803: The CU sends information #2 to a DU.

Correspondingly, the DU receives the information #2.

The information #2 sent by the CU to the DU may further include identification information of the terminal device #1. In this way, the DU can determine that the information #2 is from the terminal device #1.

In addition, an information exchange procedure between the CU and the DU is not described in this embodiment of this application.

Optionally, S804: The DU determines information #5.

For descriptions of determining the information #5 by the DU, refer to the descriptions of S605. Details are not described again.

According to the foregoing technical solution, an access network device can receive and process information by using a split architecture in this embodiment of this application. In this way, a parameter configuration at the NSAG granularity can be adjusted. This further facilitates deployment of the access network device. For example, cloud-based deployment can be performed.

It should be noted that the method shown in FIG. 8 may be applied to a communication system. The communication system includes a CU and a DU, and the CU and the DU interact with each other to complete the foregoing technical solution.

The communication system may be understood as a communication device or a communication apparatus. For example, the foregoing communication system may be understood as an access network device. This is not limited.

It should be further noted that the CU may be responsible for functions such as information receiving and sending. The CU communicates with the terminal device. For example, the CU sends information #1 to a terminal device, and the CU receives information #2 from the terminal device. The DU may be responsible for functions such as information processing. For example, the DU is configured to adjust a parameter configuration at the NSAG granularity based on the information #2.

In a possible implementation, the CU may be understood as a distributed device or a distributed apparatus, and can implement a function that is the same as or similar to that of the CU. The DU may be understood as a central device, a central apparatus, or the like, and can implement a function that is the same as or similar to that of the DU.

Similarly, the descriptions of the CU and the DU in FIG. 8 are also applicable to descriptions in FIG. 9. Details are not described again.

FIG. 9 is a schematic interaction flowchart of a communication method 900 according to an embodiment of this application. As shown in FIG. 9, the method 900 includes the following steps.

S901: A CU sends information #1 to a terminal device #1.

Correspondingly, the terminal device #1 receives the information #1.

For descriptions of S901, refer to S701. Details are not described again.

S902: The CU sends information #6 to the terminal device #1.

Correspondingly, the terminal device #1 receives the information #6.

For descriptions of S902, refer to S702. Details are not described again.

S903: The terminal device #1 sends information #2 to the CU.

Correspondingly, the CU receives the information #2.

S904: The CU sends information #2 to a DU.

The information #2 sent by the CU to the DU may further include identification information of the terminal device #1 (for example, an identifier of the terminal device #1 or information related to the identifier of the terminal device #1 (which may be for distinguishing the terminal device #1 from another terminal device), which is not limited). In this way, the DU can determine that the information #2 sent by the CU is from the terminal device #1.

Further, if the CU receives a plurality of pieces of information #2 sent by the terminal device, the CU may perform statistics collection processing on the plurality of pieces of information #2 from the terminal device, for example, taking an average value or taking a largest value of the information and predicting a future average value or taking a largest value of the information based on features of the information, and send a statistics collection result to the DU.

Further, if the CU perform statistics collection processing on the plurality of pieces of information #2, at least one of the following corresponding to each NSAG may be included:
an average quantity of transmissions of a preamble corresponding to a signal based on which random access is performed;
a largest quantity of transmissions of the preamble corresponding to the signal based on which the random access is performed;
a predicted value of the average quantity of transmissions of the preamble corresponding to the signal based on which the random access is performed; or
a predicted value of the largest quantity of transmissions of the preamble corresponding to the signal based on which the random access is performed.

In this way, the DU can adjust a random access configuration of an NSAG based on the information. Further, the DU can adjust a random access parameter configuration at the granularity of an NSAG #1 more precisely based on one or more pieces of the information.

In a possible implementation, the CU may send content included in the information #2 to the DU by using one or more pieces of information. This is not limited.

Optionally, S905: The DU determines information #7.

For detailed descriptions, refer to S704. Details are not described again.

According to the foregoing technical solution, an access network device can receive and process information by using a split architecture in this embodiment of this application. In this way, a parameter configuration at the NSAG granularity can be adjusted. This further facilitates deployment of the access network device. For example, cloud-based deployment can be performed.

It should be noted that the solutions shown in FIG. 5 to FIG. 9 are described by using an NSAG as an example. The methods in embodiments of this application are further applicable to another feature, for example, a reduced capability (reduced capability, RedCap), small data (small Data), and message 3 repetition (message 3 repetition).

Using the RedCap as an example, a network access stratum (access stratum, AS) configures a dedicated network access parameter for a terminal device using the RedCap technology. The terminal device performs network access based on the network access parameter, and reports RedCap-related network access information to the access network device, to support the access network device in adjusting the network access parameter dedicated to the RedCap.

In addition, the methods in embodiments of this application are further applicable to a combination of a plurality of features (feature combination), for example, a combination of an NSAG and a RedCap.

Apparatus embodiments corresponding to the method embodiments of this application are described below. The following briefly describes only the apparatus. For specific implementation steps and details of the solution, refer to the foregoing method embodiments.

To implement functions in the methods provided in this application, both a terminal device and a network device may include a hardware structure and/or a software module, and implement the foregoing functions in a form of the hardware structure, the software module, or a combination of the hardware structure and the software module. Whether a function in the foregoing functions is performed by the hardware structure, the software module, or the combination of the hardware structure and the software module depends on particular applications and design constraint conditions of the technical solutions.

FIG. 10 is a block diagram of a communication apparatus 1000 according to an embodiment of this application. The communication apparatus 1000 includes a processor 1010 and a communication interface 1020. The processor 1010 and the communication interface 1020 may be connected to each other through a bus 1030. The communication apparatus 1000 may be a terminal device, or may be an access network device.

Optionally, the communication apparatus 1000 may further include a memory 1040. The memory 1040 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 1040 is configured for related instructions and data.

The processor 1010 may be one or more central processing units (central processing unit, CPU). When the processor 1010 is one CPU, the CPU may be a single-core CPU, or may be a multi-core CPU.

The processor 1010 may be a signal processor, a chip, another integrated circuit that can implement the methods in this application, or a part of circuits that are in the foregoing processor, chip, or integrated circuit and that are configured to perform a processing function. In addition, the communication interface 1020 may alternatively be an input/output interface. The input/output interface is configured to input or output a signal or data, or may be an input/output circuit.

When the communication apparatus 1000 is a terminal device, for example, the processor 1010 is configured to perform the following operations: receiving information #1, sending information #2 to an access network device, and the like.

When the communication apparatus 1000 is an access network device, for example, the processor 1010 is configured to perform the following operations: sending information #1, receiving information #2, and the like.

The foregoing content is merely used as an example for description. When the communication apparatus 1000 is a terminal device or an access network device, the communication apparatus 1000 is responsible for performing the methods or steps related to the terminal device or the access network device in the foregoing method embodiments.

It may be understood that, when the communication apparatus 1000 is a terminal device or an access network device, the communication interface 1020 may also be referred to as a transceiver. The foregoing descriptions are merely examples for description. For specific content, refer to the content shown in the method embodiments. For implementations of the operations in FIG. 10, refer to the corresponding descriptions of the method embodiments shown in FIG. 5 to FIG. 9.

It should be noted that the communication apparatus 1000 shown in FIG. 10 may alternatively be a module or a part of an access network device. For example, the communication apparatus 1000 may be a CU or a DU in the access network device. This is not limited.

FIG. 11 is a block diagram of a communication apparatus 1100 according to an embodiment of this application. The communication apparatus 1100 may be a terminal device or an access network device, or may be a chip or a module in the terminal device or the access network device, and is configured to implement the methods in the foregoing embodiments. The communication apparatus 1100 includes a transceiver unit 1110. The following describes the transceiver unit 1110 by using an example.

The transceiver unit 1110 may include a sending unit and a receiving unit. The sending unit is configured to perform a sending action of the communication apparatus. The receiving unit is configured to perform a receiving action of the communication apparatus. For ease of description, in this embodiment of this application, the sending unit and the receiving unit are combined into one transceiver unit. Unified descriptions are provided herein, and details are not described below again.

When the communication apparatus 1100 is a terminal device, for example, the transceiver unit 1110 is configured to receive information #1. The transceiver unit 1110 is further configured to send information #2 and the like to an access network device.

Optionally, the communication apparatus 1100 may further include a processing unit 1120, configured to perform content related to steps such as processing and coordination of the terminal device.

When the communication apparatus 1100 is an access network device, for example, the transceiver unit 1110 is configured to send information #1 to the terminal device, and is further configured to receive information #2 and the like.

Optionally, the communication apparatus 1100 may further include a processing unit 1120, configured to perform content related to steps such as processing and coordination of the access network device.

The foregoing content is merely used as an example for description. When the communication apparatus 1100 is a terminal device or an access network device, the communication apparatus 1100 is responsible for performing the methods or steps related to the terminal device or the access network device in the foregoing method embodiments.

Optionally, the communication apparatus 1100 further includes a storage unit 1130. The storage unit 1130 is configured to store a program or code for performing the foregoing methods.

It should be noted that the communication apparatus 1100 shown in FIG. 11 may alternatively be a module or a part of an access network device. For example, the communication apparatus 1100 may be a CU or a DU in the access network device. This is not limited.

The apparatus embodiments shown in FIG. 10 and FIG. 11 are for implementing the content described in FIG. 5 to FIG. 9. For specific execution steps and methods of the apparatuses shown in FIG. 10 and FIG. 11, refer to the content described in the foregoing method embodiments.

This application further provides a chip, including a processor, configured to invoke instructions from a memory and run the instructions stored in the memory, to cause a communication device on which the chip is installed to perform the methods in the foregoing examples.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing examples. Optionally, the chip further includes the memory. The memory is configured to store a computer program or the code.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the methods in the foregoing embodiments are implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

A person of ordinary skill in the art may be aware that, in combination with the examples described in embodiments disclosed in this specification, units and algorithm steps may be implemented by electronic hardware or a combination of computer software and electronic hardware. Whether these functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, the disclosed system, apparatus, and method may be implemented in another manner. For example, the apparatus embodiments described above are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in the form of a software functional unit and sold or used as an independent product, the functions may be stored in a computer-readable storage medium. Based on such an understanding, the technical solutions in embodiments of this application essentially, or the part contributing to a conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of embodiments of this application, but are not intended to limit the protection scope embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A communication method, comprising:
receiving first information, wherein the first information is for configuring a first parameter, and the first parameter corresponds to a first network slice access stratum group; and
sending second information, wherein the second information indicates information that is related to the first network slice access stratum group and that is used when a terminal device performs network access based on the first parameter.

2. The method according to claim 1, wherein the network access is at least one of cell reselection and random access.

3. The method according to claim 2, wherein the network access is the random access, and the second information comprises identification information of the first network slice access stratum group.

4. The method according to claim 3, wherein the second information further comprises at least one of the following:
a cell identifier, an index of a signal based on which the random access is performed, or a quantity of preambles corresponding to the signal based on which the random access is performed, wherein the signal based on which the random access is performed is associated with the first network slice access stratum group.

5. The method according to claim 2, wherein the network access is the cell reselection, and the second information comprises at least one of the following:
identification information of the first network slice access stratum group or identification information of a second network slice access stratum group, wherein
the first network slice access stratum group is a network slice access stratum group selected by the terminal device; and
the second network slice access stratum group meets at least one of the following:
a priority of the second network slice access stratum group is higher than a priority of the first network slice access stratum group; or
a priority of the second network slice access stratum group is equal to a priority of the first network slice access stratum group.

6. The method according to claim 5, wherein the second network slice access stratum group further meets:
the second network slice access stratum group is a network slice access stratum group with a highest priority among one or more network slice access stratum groups maintained by the terminal device.

7. The method according to claim 5 or 6, wherein the method further comprises:
receiving request information, wherein the request information is for requesting the terminal device to send the second information.

8. The method according to any one of claims 1 to 7, wherein the second information is carried in radio resource control signaling.

9. The method according to any one of claims 1 to 8, wherein the second information is sent after the terminal device enters a connected state.

10. The method according to any one of claims 1 to 9, wherein the sending the second information comprises:
sending the second information to a central unit of an access network device.

11. A communication method, applied to an access network device, and comprising:
sending first information, wherein the first information is for configuring a first parameter, and the first parameter corresponds to a first network slice access stratum group; and
receiving second information, wherein the second information indicates information that is related to the first network slice access stratum group and that is used when a terminal device performs network access based on the first parameter.

12. The method according to claim 11, wherein the network access is at least one of cell reselection and random access.

13. The method according to claim 12, wherein the network access is the random access, and the second information comprises identification information of the first network slice access stratum group.

14. The method according to claim 13, wherein the second information further comprises at least one of the following:
a cell identifier, an index of a signal based on which the random access is performed, or a quantity of preambles corresponding to the signal based on which the random access is performed, wherein the signal based on which the random access is performed is associated with the first network slice access stratum group.

15. The method according to claim 12, wherein the network access is the cell reselection, and the second information comprises at least one of the following:
identification information of the first network slice access stratum group or identification information of a second network slice access stratum group, wherein
the first network slice access stratum group is a network slice access stratum group selected by the terminal device; and
the second network slice access stratum group meets at least one of the following:
a priority of the second network slice access stratum group is higher than a priority of the first network slice access stratum group; or
a priority of the second network slice access stratum group is equal to a priority of the first network slice access stratum group.

16. The method according to claim 15, wherein the second network slice access stratum group further meets:
the second network slice access stratum group is a network slice access stratum group with a highest priority among one or more network slice access stratum groups maintained by the terminal device.

17. The method according to claim 15 or 16, wherein the method further comprises:
sending request information, wherein the request information is for requesting the terminal device to send the second information.

18. The method according to any one of claims 11 to 17, wherein the method further comprises:
sending third information, wherein the third information is determined based on the second information, the third information is for configuring a second parameter, the second parameter is for performing the network access, the second parameter corresponds to the first network slice access stratum group, and the second parameter is different from the first parameter.

19. The method according to any one of claims 11 to 18, wherein the access network device comprises a distributed unit and a central unit, and the receiving the second information comprises:
receiving, by the central unit, the second information; and
sending, by the central unit, the second information to the distributed unit.

20. The method according to claim 19, wherein the network access is the random access, and the second information sent by the central unit to the distributed unit further comprises at least one of the following:
an average quantity of transmissions of the preamble corresponding to the signal based on which the random access is performed, a largest quantity of transmissions of the preamble corresponding to the signal based on which the random access is performed, a predicted value of the average quantity of transmissions of the preamble corresponding to the signal based on which the random access is performed, or a predicted value of the largest quantity of transmissions of the preamble corresponding to the signal based on which the random access is performed.

21. The method according to any one of claims 11 to 20, wherein the second information is carried in radio resource control signaling.

22. The method according to any one of claims 11 to 21, wherein the second information is sent after the terminal device enters a connected state.

23. A communication system, comprising a central unit and a distributed unit, wherein
the central unit is configured to send first information, wherein the first information is for configuring a first parameter, and the first parameter corresponds to a first network slice access stratum group;
the central unit is further configured to receive second information, wherein the second information indicates information that is related to the first network slice access stratum group and that is used when a terminal device performs network access based on the first parameter; and the central unit is further configured to send the second information to the distributed unit; and
the distributed unit is configured to receive the second information.

24. The communication system according to claim 23, wherein the network access is at least one of cell reselection and random access.

25. The communication system according to claim 24, wherein the network access is the random access, and the second information comprises identification information of the first network slice access stratum group.

26. The communication system according to claim 24, wherein the network access is the cell reselection, and the second information comprises at least one of the following:
identification information of the first network slice access stratum group or identification information of a second network slice access stratum group, wherein
the first network slice access stratum group is a network slice access stratum group selected by the terminal device; and
the second network slice access stratum group meets at least one of the following:
a priority of the second network slice access stratum group is higher than a priority of the first network slice access stratum group; or
a priority of the second network slice access stratum group is equal to a priority of the first network slice access stratum group.

27. The communication system according to any one of claims 23 to 26, wherein
the distributed unit is configured to determine third information based on the second information, wherein the third information is for configuring a second parameter,
the second parameter is for performing the network access, the second parameter corresponds to the first network slice access stratum group, and the second parameter is different from the first parameter; and the distributed unit is further configured to send the third information to the central unit; and
the central unit is configured to receive the third information, and is further configured to send the third information.

28. A communication apparatus, comprising a processor, wherein the processor is configured to cause, by executing a computer program or instructions or by using a logic circuit,
the communication apparatus to perform the method according to any one of claims 1 to 10; or
the communication apparatus to perform the method according to any one of claims 11 to 22.

29. A communication apparatus, comprising a logic circuit and an input/output interface, wherein the input/output interface is configured to input and/or output a signal; and
the logic circuit is configured to perform the method according to any one of claims 1 to 10; or
the logic circuit is configured to perform the method according to any one of claims 11 to 22.

30. A computer-readable storage medium, wherein the computer-readable storage medium stores a computer program or instructions, and when the computer program or the instructions are run on a computer,
the method according to any one of claims 1 to 10 is performed; or
the method according to any one of claims 11 to 22 is performed.

31. A computer program product, comprising instructions, wherein when the instructions are run on a computer,
the method according to any one of claims 1 to 10 is performed; or
the method according to any one of claims 11 to 22 is performed.

32. A communication apparatus, comprising a transceiver unit configured to:
receive first information, wherein the first information is for configuring a first parameter, and the first parameter corresponds to a first network slice access stratum group; and
send second information, wherein the second information indicates information that is related to the first network slice access stratum group and that is used when a terminal device performs network access based on the first parameter.

33. The apparatus according to claim 32, wherein the network access is at least one of cell reselection and random access.

34. The apparatus according to claim 33, wherein the network access is the random access, and the second information comprises identification information of the first network slice access stratum group.

35. The apparatus according to claim 34, wherein the second information further comprises at least one of the following:
a cell identifier, an index of a signal based on which the random access is performed, or a quantity of preambles corresponding to the signal based on which the random access is performed, wherein the signal based on which the random access is performed is associated with the first network slice access stratum group.

36. The apparatus according to claim 33, wherein the network access is the cell reselection, and the second information comprises at least one of the following:
identification information of the first network slice access stratum group or identification information of a second network slice access stratum group, wherein
the first network slice access stratum group is a network slice access stratum group selected by the terminal device; and
the second network slice access stratum group meets at least one of the following:
a priority of the second network slice access stratum group is higher than a priority of the first network slice access stratum group; or
a priority of the second network slice access stratum group is equal to a priority of the first network slice access stratum group.

37. The apparatus according to claim 36, wherein the second network slice access stratum group further meets:
the second network slice access stratum group is a network slice access stratum group with a highest priority among one or more network slice access stratum groups maintained by the terminal device.

38. The apparatus according to claim 36 or 37, wherein the transceiver unit is further configured to receive request information, wherein the request information is for requesting the terminal device to send the second information.

39. The apparatus according to any one of claims 32 to 38, wherein the second information is carried in radio resource control signaling.

40. The apparatus according to any one of claims 32 to 39, wherein the second information is sent after the terminal device enters a connected state.

41. The apparatus according to any one of claims 32 to 40, wherein the sending the second information comprises:
sending the second information to a central unit of an access network device.

42. A communication apparatus, comprising a transceiver unit configured to:
send first information, wherein the first information is for configuring a first parameter, and the first parameter corresponds to a first network slice access stratum group; and
receive second information, wherein the second information indicates information that is related to the first network slice access stratum group and that is used when a terminal device performs network access based on the first parameter.

43. The apparatus according to claim 42, wherein the network access is at least one of cell reselection and random access.

44. The apparatus according to claim 43, wherein the network access is the random access, and the second information comprises identification information of the first network slice access stratum group.

45. The apparatus according to claim 44, wherein the second information further comprises at least one of the following:
a cell identifier, an index of a signal based on which the random access is performed, or a quantity of preambles corresponding to the signal based on which the random access is performed, wherein the signal based on which the random access is performed is associated with the first network slice access stratum group.

46. The apparatus according to claim 43, wherein the network access is the cell reselection, and the second information comprises at least one of the following:
identification information of the first network slice access stratum group or identification information of a second network slice access stratum group, wherein
the first network slice access stratum group is a network slice access stratum group selected by the terminal device; and
the second network slice access stratum group meets at least one of the following:
a priority of the second network slice access stratum group is higher than a priority of the first network slice access stratum group; or
a priority of the second network slice access stratum group is equal to a priority of the first network slice access stratum group.

47. The apparatus according to claim 46, wherein the second network slice access stratum group further meets:
the second network slice access stratum group is a network slice access stratum group with a highest priority among one or more network slice access stratum groups maintained by the terminal device.

48. The apparatus according to claim 46 or 47, wherein the transceiver unit is further configured to send request information, wherein the request information is for requesting the terminal device to send the second information.

49. The apparatus according to any one of claims 42 to 48, wherein the communication apparatus further comprises a processing unit, wherein
the processing unit is configured to determine third information based on the second information, wherein the third information is for configuring a second parameter, the second parameter is for performing the network access, the second parameter corresponds to the first network slice access stratum group, and the second parameter is different from the first parameter; and
the transceiver unit is further configured to send the third information.

50. The apparatus according to any one of claims 42 to 49, wherein the receiving the second information comprises:
the transceiver unit is configured to receive the second information from a central unit.

51. The apparatus according to claim 50, wherein the network access is the random access, and the second information further comprises at least one of the following:
an average quantity of transmissions of the preamble corresponding to the signal based on which the random access is performed, a largest quantity of transmissions of the preamble corresponding to the signal based on which the random access is performed, a predicted value of the average quantity of transmissions of the preamble corresponding to the signal based on which the random access is performed, or a predicted value of the largest quantity of transmissions of the preamble corresponding to the signal based on which the random access is performed.

52. The apparatus according to any one of claims 42 to 51, wherein the second information is carried in radio resource control signaling.

53. The apparatus according to any one of claims 42 to 52, wherein the second information is sent after the terminal device enters a connected state.
